(19) Europäisches Patentamt
European Patent Office
Office européen des brevets

(11) **EP 3 304 038 B1**

(12) **FASCICULE DE BREVET EUROPEEN**

(45) Date de publication et mention de la délivrance du brevet:
**23.12.2020 Bulletin 2020/52**

(51) Int Cl.:
*G01N 15/10* *(2006.01)*          *G01N 15/02* *(2006.01)*
*G01W 1/14* *(2006.01)*          *G01W 1/18* *(2006.01)*

(21) Numéro de dépôt: **16730289.2**

(22) Date de dépôt: **06.06.2016**

(86) Numéro de dépôt international:
**PCT/EP2016/062753**

(87) Numéro de publication internationale:
**WO 2016/193489 (08.12.2016 Gazette 2016/49)**

(54) **DISPOSITIF A CAMERA UNIQUE ET PROCEDE DE MESURE POUR CARACTERISER DES GOUTTES DE PLUIE**

VORRICHTUNG MIT EINER EINZELKAMERA UND MESSVERFAHREN ZUR CHARAKTERISIERUNG VON REGENTROPFEN

DEVICE WITH A SINGLE CAMERA AND MEASURING METHOD FOR CHARACTERISING RAIN DROPS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.06.2015 FR 1555164**

(43) Date de publication de la demande:
**11.04.2018 Bulletin 2018/15**

(73) Titulaires:
• **UNIVERSITE GRENOBLE ALPES**
  **38400 Saint Martin d'Hères (FR)**
• **Institut Polytechnique de Grenoble**
  **38031 Grenoble Cedex 1 (FR)**

(72) Inventeurs:
• **MOLINIE, Gilles**
  **31320 Mervilla (FR)**
• **DESVIGNES, Michel**
  **38700 La Tronche (FR)**

(74) Mandataire: **Novagraaf Technologies**
  **Bâtiment O2**
  **2, rue Sarah Bernhardt**
  **CS90017**
  **92665 Asnières-sur-Seine Cedex (FR)**

(56) Documents cités:
**FR-A1- 2 466 235**

• **MICHEL DESVIGNES ET AL: "Raindrops size and shape from videosonde and image processing", INDUSTRIAL ELECTRONICS (ISIE), 2012 IEEE INTERNATIONAL SYMPOSIUM ON, IEEE, 28 mai 2012 (2012-05-28), pages 1164-1167, XP032199879, DOI: 10.1109/ISIE.2012.6237253 ISBN: 978-1-4673-0159-6**
• **ANTON KRUGER ET AL: "Two-Dimensional Video Disdrometer: A Description", JOURNAL OF ATMOSPHERIC AND OCEANIC TECHNOLOGY, vol. 19, no. 5, 1 mai 2002 (2002-05-01), pages 602-617, XP055264367, US ISSN: 0739-0572, DOI: 10.1175/1520-0426(2002)019<0602:TDVDAD>2.0 .CO;2**
• **BOUSSATON M P ET AL: "A new videosonde with a particle charge measurement device for in situ observation of precipitation particles", JOURNAL OF ATMOSPHERIC AND OCEANIC TECHNOLOGY, vol. 21, no. 10, octobre 2004 (2004-10), pages 1519-1531, XP002760270, AMERICAN METEOROLOGICAL SOCIETY US DOI: 10.1175/1520-0426(2004)021<1519:ANVWAP>2.0 .CO;2**
• **BOUSSATON M P ET AL: "A new videosonde with a particle charge measurement device for in situ observation of precipitation particles", AMERICAN METEOROLOGICAL SOCIETY,, vol. 21, 1 October 2004 (2004-10-01), pages 1519-1531, XP002760270, DOI: 10.1175/1520-0426(2004)021<1519:ANVWAP>2.0 .CO;2**

**Description**

**DOMAINE TECHNIQUE ET ART ANTÉRIEUR**

L'invention concerne la caractérisation de gouttes de pluie, et notamment leur taille ou leur forme, et l'estimation de leur vitesse.

La connaissance de ces paramètres permet la calibration des radars atmosphérique qui font une mesure volumique de la pluie.

L'invention peut aussi être mise en œuvre pour la détection de tout type d'hydrométéores, liquides ou solides, par exemple la neige ou la grêle.

Une autre application concerne la détection de l'intensité de la pluie, lorsque celle-ci arrive au sol, par exemple pour des études dans le domaine de l'érosion.

Le document de A..Kruger et al., « Two dimensional video disdrometer : a description », J.Atmos.Oceanic Technol., 19, 602-217, 2002, décrit un dispositif qui comporte deux caméras à haute vitesse, qui captent simultanément l'image des gouttes.

La surface d'échantillonnage de ce dispositif est faible ($10 \times 10$ cm$^2$). Et il faut un temps d'intégration de plusieurs minutes pour récolter un échantillon fiable de gouttes de pluie. Pendant cette période de plusieurs minutes, le déplacement des nuages fait que les gouttes qui arrivent au sol n'appartiennent pas à une cellule de pluie homogène.

Un autre type de dispositif est dit « de type optique », les hydrométéores interrompant un faisceau laser entre un émetteur et récepteur. L'atténuation de la lumière permet de déduire la taille et la vitesse des hydrométéores. Mais, comme dans le dispositif précédent, la surface d'échantillonnage est faible, elle ne peut pas être agrandie et ce capteur ne donne pas d'information sur la forme des hydrométéores. Or cette information est importante pour calculer la masse des gouttes d'eau d'une averse. Dans cette catégorie, on connaît par exemple le dispositif commercialisé sous le nom de *« Parsivel »,* dans lequel un faisceau laser est émis sous la forme d'une nappe, inadapté pour la localisation des hydrométéores dans l'espace, ce qui limite sa fréquence d'échantillonnage.

Une autre approche a été décrite par Boussaton et al., dans « A new videosonde with a particle charge measurement device for in-situ observation of précipitation particles, J.Atmos.Oceanic Technol., 21, 1519-1531, (2004). Cependant, cette technique n'a pas du tout été automatisée, et ne permet pas une caractérisation exhaustive des gouttes d'une averse.

Une approche similaire est décrite pas Desvignes et al. dans "Raindrops size and shape from videosonde and image processing", 2012 IEEE INTERNATIONAL SYMPOSIUM ON INDUSTRIAL ELECTRONICS, 1164-1167, (28-31 May 2012) et permet la caractérisation des gouttes d'une averse.

Il se pose donc le problème de trouver une nouvelle technique, qui permette d'obtenir plus d'informations physiques que ce que l'on obtient avec les techniques actuellement connues, de préférence de manière plus rapide et plus précise qu'avec les dispositifs actuellement connus.

Il se pose également le problème de trouver une nouvelle technique, qui permette un échantillonnage des gouttes, ou de plus de gouttes que par les techniques connues, de manière à ce que la distribution de la taille des gouttes enregistrées pendant 10 secondes au plus ; cette technique doit de préférence être robuste.

Il se pose également le problème de mesurer ou d'estimer, dans le même temps, la forme des gouttes, ou, plus généralement, des hydrométéores.

**EXPOSÉ DE L'INVENTION**

L'invention propose à cette fin un dispositif de caractérisation d'hydrométéore, selon la revendication 1.

Un dispositif selon l'invention permet d'accroître la surface d'échantillonnage, la seule limitation étant la résolution de la caméra. Il permet aussi de mesurer la forme des hydrométéores dans deux dimensions de l'espace.

L'utilisation de sources de rayonnement à angle d'émission large, ou de sources ponctuelles de rayonnement, permet d'améliorer considérablement la statistique de mesure.

Un traitement des données d'image visualisée par la caméra peut par exemple comporter un comptage des pixels qui sont inclus dans la représentation, sur l'image, d'une goutte et des deux ombres qui lui sont associées, ou dans la représentation des deux ombres qui sont associées à une goutte.

Les moyens de traitement peuvent comporter des moyens, ou des moyens spécialement programmés, pour calculer, ou estimer, à partir des données d'une ou plusieurs image(s) visualisée(s) par la caméra, la taille et/ou la forme des hydrométéores et/ou pour compter des hydrométéores, par exemple en fonction de leur taille, et/ou pour calculer une répartition spatiale des d'hydrométéores et/ou pour représenter, en trois dimensions, un volume d'hydrométéores. Ces moyens peuvent comporter des moyens électroniques spécialement programmés, par exemple un micro-ordinateur ou un processeur ou un calculateur ou un circuit électrique ou électronique programmé. Un dispositif selon l'invention, ou leurs moyens de traitement, peut comporter des moyens, dits d'étalonnage, pour identifier des coordonnées métriques de points de l'écran et des moyens pour leur associer des pixels de l'image obtenue par la caméra.

Ces moyens, ou les moyens de traitement, peuvent mettre en œuvre un modèle linéaire, avec, ou sans, correction de distorsion radiale.

Avantageusement, des moyens, ou les moyens de traitement, permettent d'associer une ombre d'une image à une autre ombre de l'image, formant ainsi une paire d'ombres associées (à un même hydrométéore, même si celui-ci n'est pas visible sur l'image), et éventuellement à un hydrométéore de cette même image, formant ainsi une triplette de 2 ombres associées à un hydrométéore.

2 ombres, et éventuellement un hydrométéore, peuvent être associées, dans une triplette ou une paire, en fonction de leurs dispositions dans l'espace, et de leurs tailles.

Des critères d'association, qui peuvent être mis en œuvre par les moyens de traitement, peuvent être les suivants :

- 2 ombres associées, dans une triplette ou une paire, sont disposées suivant une direction parallèle à celle qui relie les 2 sources lumineuses ;
- 2 ombres associées, dans une triplette ou une paire, ont des tailles comparables;
- 2 ombres et un hydrométéore associés dans une triplette, ont des dispositions cohérentes dans l'image ;
- chaque ombre et chaque hydrométéore appartient à un seul triplet ou une seule paire.

Dans un dispositif selon l'invention, chacune des sources de rayonnement est de préférence ponctuelle, et non focalisée ; l'absence de dispositif ou de moyens de focalisation permet d'éviter les phénomènes d'interférence se produisant entre sources secondaires créées par le dispositif de focalisation.

Ainsi chacune des sources de rayonnement peut comporter une diode sans optique de focalisation, par exemple une diode électro-luminescente dont on a retiré l'optique de focalisation.

Dans un dispositif selon l'invention, l'estimation de la forme des hydrométéores qui peut être mise en œuvre par les moyens de traitement, peut comporter :

- l'identification, dans une image visualisée par la caméra, des pixels appartenant à une ombre d'un hydrométéore ou à un hydrométéore ;
- le choix, pour chaque hydrométéore, d'une forme approchée de l'hydrométéore ;
- l'estimation des paramètres géométriques de cette forme approchée.

La forme approchée d'un hydrométéore peut être par exemple une sphère ou un ellipsoïde.

La résolution temporelle d'un dispositif selon l'invention est élevée (environ 1 à 10 s), d'au moins 10 à 100 fois supérieure à celle des appareils traditionnels.

En outre, il permet de mesurer la forme des hydrométéores.

L'invention propose également un procédé de caractérisation d'hydrométéores, par exemple des gouttes de pluie, par exemple mettant en oeuvre un dispositif selon l'invention, dans lequel :

- on éclaire des hydrométéores, à l'aide de la première et de la deuxième source de rayonnement, pour former des ombres sur l'écran ;
- on visualise les hydrométéores et leur projection sur l'écran à l'aide de la caméra unique,
- on traite les données de l'image à l'aide des moyens de traitement.

L'invention propose également un procédé de caractérisation d'hydrométéores, par exemple des gouttes de pluie, dans lequel :

- on éclaire des hydrométéores, à l'aide d'une première et d'une deuxième source de rayonnement, l'angle d'émission de chacune de ces sources étant large, supérieur à 50°, ou à 60°, ou à 100°, ces sources de rayonnement étant disposées de manière à éclairer un écran disposé en face d'une caméra unique ; ainsi, on forme des ombres sur l'écran ;
- on visualise les hydrométéores et leur projection sur l'écran à l'aide de la caméra unique,
- on traite numériquement, par exemple à l'aide de moyens électroniques spécialement programmés, par exemple encore ceux déjà mentionnés ci-dessus, les données d'au moins une image d'hydrométéores et/ou leurs ombres visualisée et/ou enregistrée par la caméra, afin d'estimer au moins la taille et/ou la forme des hydrométéores.

Un traitement des données d'image visualisée et/ou enregistrée par la caméra peut par exemple comporter un comptage des pixels qui sont inclus dans la représentation, sur l'image, d'une goutte et des deux ombres qui lui sont associées, ou dans les deux ombres qui sont associées à une goutte.

Dans un procédé ou un dispositif selon l'invention, la première et de la deuxième source de rayonnement peuvent être disposées de part et d'autre de la caméra, ou au-dessus de la caméra, ou au-dessous de la caméra.

Un procédé selon l'invention peut permettre d'estimer au moins la taille et/ou la forme des hydrométéores.

Une calibration préalable du dispositif peut être réalisée.

Les hydrométéores peuvent être comptés, et/ou un volume d'hydrométéores peut être représenté en 3 dimensions ou une répartition spatiale d'hydrométéores peut être estimée ou calculée.

Dans un procédé ou un dispositif selon l'invention, une représentation en 3 dimensions peut être réalisée à partir d'un calcul des dimensions réelles de la goutte, lui-même effectué à partir des données géométriques mesurées (par exemple : la distance entre les deux ombres d'une même goutte). Les moyens de traitement de données d'un dispositif selon l'invention sont donc programmés pour réaliser un tel calcul, puis une telle représentation en 3 dimensions.

Un tel procédé peut comporter, préalablement, une étape d'étalonnage, permettant d'identifier des coordonnées métriques de points de l'écran et de leur associer des pixels de l'image obtenue par la caméra.

Un tel étalonnage peut être réalisé à l'aide d'un modèle linéaire, avec, ou sans, correction de distorsion radiale.

Dans un procédé selon l'invention, une ombre d'une image peut être associée à une autre ombre de l'image, formant ainsi une paire d'ombres associées, et éventuellement à une goutte de cette même image, formant ainsi une triplette de 2 ombres associées à un hydrométéore.

2 ombres, et éventuellement un hydrométéore, peuvent être associés, dans une triplette ou une paire, en fonction de leurs dispositions dans l'espace, et de leurs tailles.

2 ombres, et éventuellement un hydrométéore, peuvent être associés, dans une triplette ou une paire, en fonction :

- des paramètres géométriques qui expriment les distances et le positionnement relatif entre une goutte et/ou ses ombres ou entre 2 ombres ;
- et en fonction de la taille des ombres.

Un tel procédé peut utiliser les règles suivantes :

- 2 ombres associées, dans une triplette ou une paire, sont disposées suivant une direction parallèle à celle qui relie les 2 sources ;
- 2 ombres associées, dans une triplette ou une paire, ont des tailles comparables;
- 2 ombres et un hydrométéore associés dans une triplette, ont des dispositions cohérentes dans l'image ;
- chaque ombre et chaque goutte appartient à un seul triplet ou une seule paire.

L'estimation de la forme des hydrométéores peut comporter :

- l'identification, dans une image visualisée par la caméra, des pixels appartenant à une ombre d'hydrométéore ou à un hydrométéore ;
- le choix, pour chaque hydrométéore, d'une forme approchée de l'hydrométéore ;
- l'estimation des paramètres géométriques de cette forme approchée.

La forme approchée d'un hydrométéore peut être par exemple une sphère ou un ellipsoïde.

De préférence, un plan, qui passe par la surface émettrice des sources, est situé à une distance d de quelques centimètres en avant du plan de la surface d'entrée de la caméra, comprise entre 1 et 4 cm.

L'invention propose également un procédé d'étalonnage d'une caméra et d'un écran, par exemple du type mis en œuvre dans un dispositif tel que décrit ci-dessus ou dans un procédé tel que décrit ci-dessus, la caméra permettant de former une image de l'écran, ce dernier étant muni d'une grille pour identifier des coordonnées métriques de points de l'écran, ce procédé comportant :

- l'association d'une pluralité de points de l'image, de coordonnées $(X_{pix}, Y_{pix})$ exprimées en pixels, et de coordonnées $(X_s, Y_s)$ sur l'écran, en unités métriques ;
- le calcul d'une relation entre les deux types de coordonnées.

Une étape de correction de distorsions radiales résultant du système optique de la caméra peut en outre être réalisée.

Un tel procédé peut comporter, en outre, une étape d'estimation d'un nombre optimal de points, par exemple 9 points, de l'écran en vue de réaliser le procédé d'étalonnage.

Une ou plusieurs étapes d'un procédé selon l'invention peuvent être mises en œuvre à l'aide de moyens électroniques spécialement programmés à cet effet, tels que ceux déjà mentionnés ci-dessus, par exemple un micro-ordinateur ou un processeur ou un calculateur ou un circuit électrique ou électronique programmé.

## BRÈVE DESCRIPTION DES DESSINS

Les figures 1A - 1D sont des schémas de configurations expérimentales de mesure, pouvant être mises en œuvre dans le cadre de l'invention.

Les figures 2A et 2B sont, respectivement, un exemple de cliché réalisé avec la caméra, et le résultat de l'identification d'une mise en correspondance des gouttes et des ombres.

La figure 3A est l'image d'une goutte 30 et celle de son ombre, dont les figures 3B et 3C sont les profils d'intensité.

Les figures 4A et 4B sont un montage avec un écran intermédiaire entre une source et l'écran principal et un profil d'intensité de la source mesuré par la caméra.

La figure 5A représente une goutte et 2 ombres ; les figures 5B et 5C sont, respectivement, une image comportant des ombres et des gouttes et le résultat de l'association d'une goutte et de 2 ombres.

La figure 6A représente 2 ombres; les figures 6B et 6C sont, respectivement, une image comportant 2 ombres et le résultat de l'association de doublets d'ombres.

La figure 7A représente une image sur laquelle les objets (gouttes ou ombres) capturés par la caméra sont modélisés par des disques ; les figures 7B et 7C sont, des images qui indiquent quels « objets » de la figure 7A, sont associés ou appareillés lorsque, successivement, on applique un appareillage par doublet, respectivement par triplet.

La figure 8 est un schéma d'un écran et de positions repérées sur cet écran, en vue d'une calibration d'un système selon l'invention.

La figure 9 est un schéma d'une configuration particulière de mesure, pouvant être mise en oeuvre dans le cadre de l'invention.

La figure 10 représente une caméra, un écran, et 2 surfaces d'échantillonnage.

Les Figures 11A-11B sont des résultats de simulations, selon un procédé selon l'invention, respectivement de flux de gouttes et de durées d'échantillonnage en fonction des gammes de diamètres des gouttes.

La figure 12 représente une image 3D de gouttes dans l'espace.

La figure 13 représente des résultats comparatifs de comptage, entre un comptage réalisé avec un dispositif selon l'invention et un comptage manuel.

## EXPOSÉ DÉTAILLÉ DE MODES DE RÉALISATION DE L'INVENTION

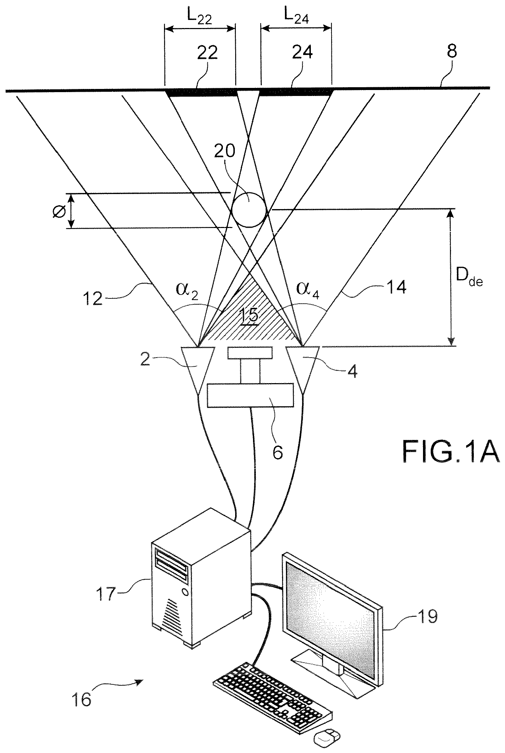

Un dispositif expérimental selon l'invention est représenté en figure 1A.

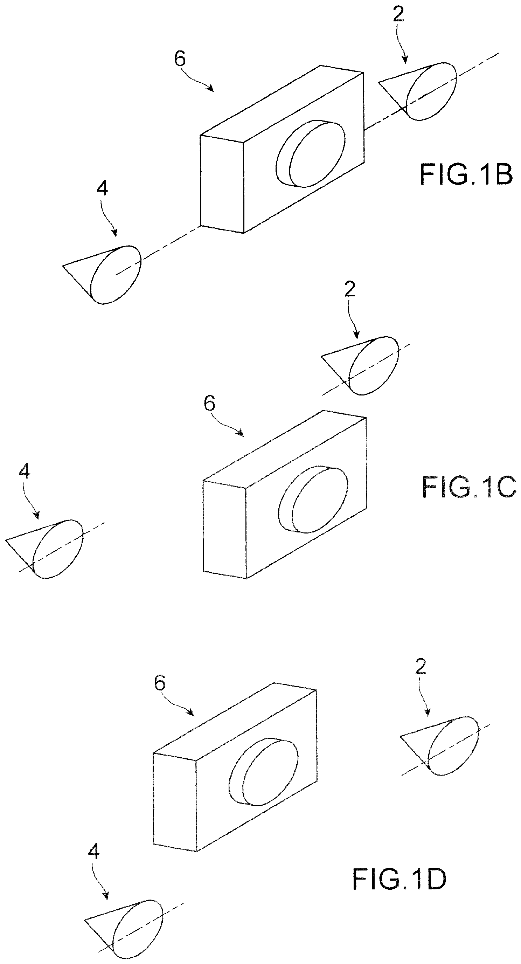

2 sources de rayonnement 2, 4 sont, dans la configuration présentée, disposées de part et d'autre d'une caméra 6, elle-même placée en face d'un écran 8. Les sources de rayonnement 2, 4 peuvent être disposées dans un même plan horizontal que la caméra 6, comme illustré en figure 1B, mais, en variante, elles peuvent aussi être disposées en hauteur par rapport à la caméra (cas de la structure de la figure 1C), ou la caméra peut être disposée en hauteur par rapport aux sources de rayonnement 2, 4 (cas de la structure de la figure 1D).

De préférence, les sources de rayonnement 2, 4 sont le plus proche possible l'une de l'autre, afin de réduire l'angle mort 15 (représenté hachuré en figure 1A) non couvert par leur champ d'illumination.

De préférence encore, les sources de rayonnement 2, 4 sont les plus proches possibles de la caméra 6.

Quelle que soit la configuration retenue (figure 1B, 1C ou 1D), chacune des sources de rayonnement a un champ, ou un angle, d'illumination ou d'éclairage, 12, 14 qui est plus large que le champ que peut capter la caméra. Par exemple chacune d'entre elle a un angle $\alpha_2$, $\alpha_4$ d'illumination ou d'éclairage d'au moins 50°.

Le choix de la valeur des angles $\alpha_2$ et $\alpha_4$ d'éclairage sera fonction d'un compromis entre la netteté de l'ombre sur l'écran et le contraste de l'image :

- pour une source de champ ou d'angle d'éclairage faible, un bon contraste (notamment entre le centre de l'ombre et le reste de l'écran à l'extérieur de l'ombre) sera obtenu sur l'écran, mais l'image ne sera pas forcément nette ;
- au contraire, le choix de sources de rayonnement dont le champ d'éclairage est large permet d'améliorer la netteté de chacune des ombres projetées sur l'écran ; en revanche, le contraste entre une ombre et l'environnement avoisinant de l'écran est réduit.

De préférence, chacune des sources de rayonnement est une source ponctuelle ou quasi ponctuelle, par exemple de diamètre ou d'étendue maximum compris(e) entre 1 et 3 mm. On choisit par exemple des diodes LED, du type que l'on peut trouver dans le commerce, mais dont on enlève l'optique de focalisation.

Au moins une partie du domaine spectral d'émission de chacune des sources correspond au domaine spectral dans lequel la caméra peut détecter une image.

La caméra est placée à une distance d'environ 50 cm de l'écran, qui a lui-même une taille d'environ 40 cm x 40 cm .

L'espace entre le caméra 6 et l'écran 8 est l'espace dans lequel des gouttes de pluie vont pouvoir tomber.

Lorsqu'une goutte 20 passe devant la caméra, chacune des sources de rayonnement projette 2 ombres 22, 24 (du fait de la présence de 2 sources) de la goutte sur l'écran. Ces ombres, et éventuellement la goutte correspondante, sont vues sur les images que la caméra permet de former. Comme expliqué plus loin, un traitement postérieur de données d'images ainsi collectées permet d'identifier le modèle théorique de forme de goutte qui s'ajuste le mieux aux images des ombres.

De préférence, l'écran est muni des moyens formant un repérage géométrique, de manière à pouvoir repérer la position, en deux dimensions, de l'ombre de la goutte sur l'écran.

La caméra va donc permettre de prendre une image de la scène qui se trouve entre elle-même et l'écran. Cette image va comporter une ou plusieurs gouttes, et les 2 ombres, qui correspondent à chaque goutte, sur l'écran.

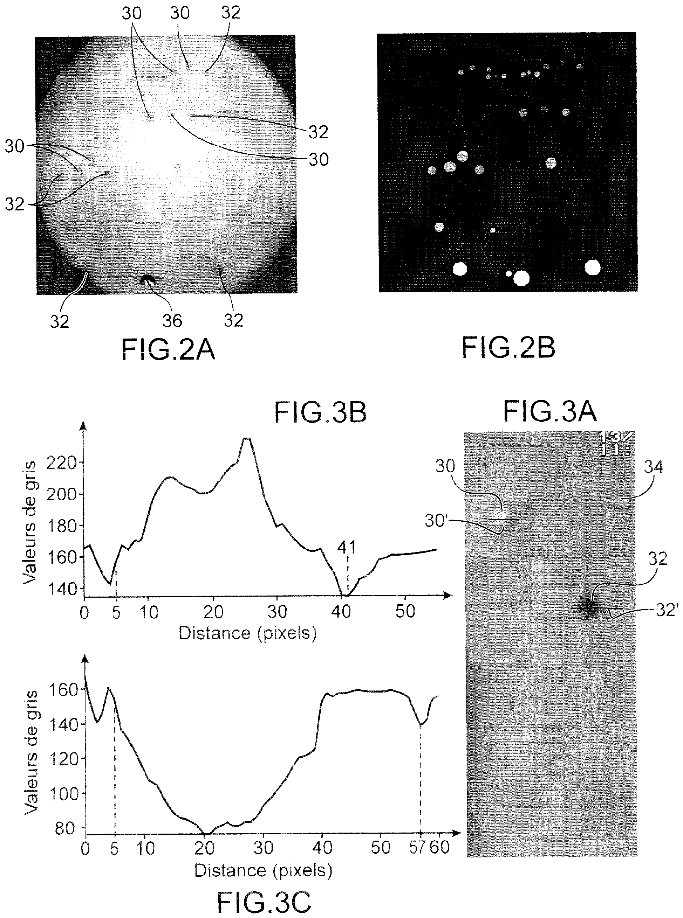

Un exemple d'une telle image est donnée en figure 2A, où les références 30 désignent des gouttes, et les références 32 des ombres de gouttes.

À partir d'une telle image, on va pouvoir associer 2 ombres à chaque goutte.

On va pouvoir également prendre en compte des couples d'ombres pour lesquelles la goutte n'a pas été visualisée par la caméra, mais qui constituent, néanmoins, une information exploitable. On peut donc prendre en compte plus d'événements que dans le cas de sources à faible angle d'éclairage.

Un évènement pour lequel une goutte, située en dehors du champ de la caméra, mais pour laquelle des ombres sont bien identifiables sur l'écran et visualisables par la caméra, peut en effet se produire, par exemple du fait de la réflexion, sur la goutte, de la lumière d'une ou des source(s). Une configuration dans laquelle les sources de rayonnement 2, 4 sont disposées au-dessus ou au-dessous de la caméra (cas de la structure des figures 1C et 1D), favorise ce genre d'événement.

Des évènements pour lesquels l'une des 2 ombres, ou les 2 ombres, ne sont pas visualisables par la caméra, peuvent également se produire, auquel cas la goutte n'est pas prise en compte.

Les ombres associées aux gouttes sont caractéristiques de l'utilisation de sources de rayonnement dont l'angle d'éclairage est large.

Dans une configuration dans laquelle les sources de rayonnement 2, 4 sont disposées au-dessus de la caméra (cas de la structure de la figure 1C), on a représenté, en figure 3A, l'image d'une goutte 30 et celle de l'une de ses ombres 32, en avant-plan d'une grille 34 constituée de carrés de 5x5 mm$^2$.

Les figures 3B et 3C représentent, respectivement, le profil d'intensité de la goutte 30 et de l'ombre 32, chacun étant mesuré selon un segment 30', 32', qui passe par la goutte et son ombre, et qui est visible en figure 3A. Sur ces figures 3B et 3C, le niveau d'intensité de la grille du fond de la figure 3A est d'environ 140. Il est visible aux pixels 5 (voir abscisse « distance » des graphes des 2 figures), 41 et 57 (figure 3C).

Les profils d'intensité des figures 3B et 3C sont complexes :

- celui de la figure 3B montrant une région centrale d'intensité élevée, tandis que les bords sont sensiblement plus sombres que le fond ;
- celui de la figure 3C ayant une forme en U, avec des pentes différentes de chaque côté du U.

L'aspect d'une ombre est plus aisé à caractériser que celui d'une goutte.

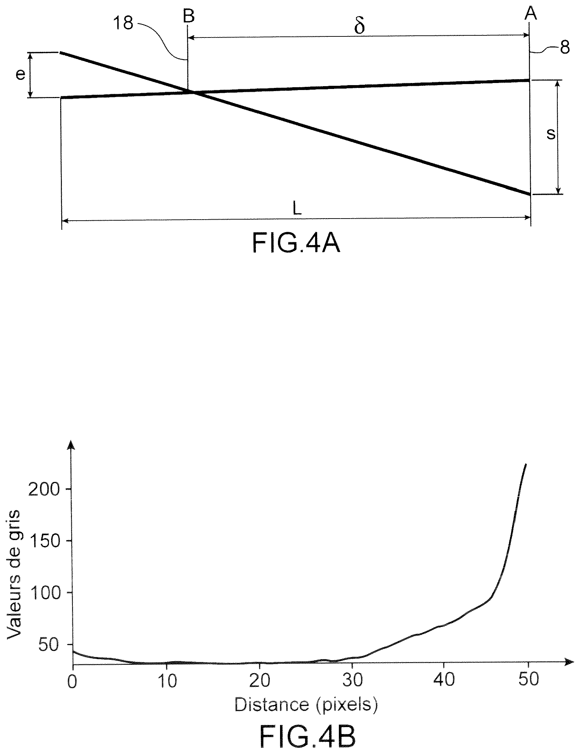

Le profil d'intensité d'une ombre n'est pas tant dû aux effets de diffraction dans la goutte, qu'à l'utilisation de sources de rayonnement avec un large angle d'éclairage. On a, en effet, réalisé une expérience qui met en évidence l'effet d'un tel angle d'éclairage sur le profil d'intensité d'une ombre. Cette expérience est schématisée en figure 4A : un écran opaque intermédiaire 18 est disposé entre l'écran 8 et l'une des sources, qui s'étend, vers l'intérieur de l'écran 18, sur une distance e (par exemple comprise entre 1 mm et 3mm). La source est à une distance L de l'écran. s est la distance sur laquelle s'étend, sur l'écran, la tache lumineuse correspondant à la partie de la source d'extension e. Le profil d'intensité qui résulte de cette expérience est illustré en figure 4B : il montre une pente continue, de la gauche vers la droite, alors qu'un profil en échelon résulterait de l'utilisation d'une source ponctuelle. L'étendue e de la source est liée aux autres paramètres par la relation suivante : $e = s(L-\delta)/\delta$. C'est ce même effet, dû à l'utilisation d'un large angle d'éclairage, qui explique la forme du profil d'intensité de la figure 3C. Mesurant la largeur de la tâche, on peut calculer le diamètre e de la source lumineuse. La valeur de e trouvée ici est identique à celle de la lampe utilisée. Ceci montre que la tache s est due à l'étendue de la source lumineuse. Le modèle d'ombre, dont l'algorithme de détection cherche les paramètres, inclue cette caractéristique du profil d'intensité de l'ombre.

On explique maintenant le fonctionnement de l'algorithme de détection des gouttes.

Pour chaque pixel, on a montré qu'on peut modéliser la distribution statistique de l'intensité lumineuse par une loi normale pour un ensemble d'image couvrant une période de temps inférieure à, par exemple, une minute environ.

On estime les paramètres de cette loi par les valeurs empiriques de la moyenne et de l'écart-type des intensités du pixel étudié dans N images consécutives de celle étudiée (N pouvant être adapté par l'utilisateur). Plus N est grand, plus le temps de calcul s'accroît. De manière pratique, N = 30 est un bon compromis.

D'autres lois que la loi normale peuvent être utilisées. Mais théoriquement les faibles variations lumineuses aléatoires autour de l'intensité moyenne constituent un bruit blanc qui suit une loi normale ; cette dernière est donc utilisée préférentiellement.

Dans une première étape, l'intensité de chaque pixel est analysée, afin d'identifier les évènements rares. Ces évènements peuvent être :

- une goutte, si le pixel est plus clair qu'il ne l'est habituellement ;
- ou une ombre, s'il est plus sombre.

Ces évènements seront identifiés comme tels si, simultanément, les pixels connexes ont les mêmes caractéristiques d'intensité.

L'intensité d'un pixel est considérée comme un évènement rare si elle est supérieure à l'intensité moyenne plus $\alpha$ fois l'écart-type (a est une constante par exemple comprise entre 2 et 3) ou, symétriquement, par rapport à la moyenne, c'est-à-dire inférieure à la moyenne moins $\alpha$ fois l'écart-type.

Dans une deuxième étape on identifie les paramètres du modèle de la forme des gouttes.

Plusieurs modèles peuvent être utilisés, notamment celui d'un cercle ou celui d'une ellipse.

Par exemple, chaque ombre de goutte a une forme proche d'un cercle si son diamètre est inférieur à 2mm environ. Une ombre plus grosse ressemble à une olive dont la base est aplatie (forme « sessile », comme expliqué dans l'article de Beard et al., 2010, « A new understanding of raindrop shape », Atmospheric Research, Vol. 97).

Le cas le plus simple est celui de l'identification de l'ombre à un disque.

L'algorithme recherche le barycentre de l'ensemble des pixels de ce qui est, potentiellement, une goutte ou une ombre.

On calcule l'intensité lumineuse dans un cercle de rayon R (dans le cas d'un cercle) et un autre concentrique de rayon K.R (K vaut par exemple 1,3). On fait croître séquentiellement le rayon R. Le modèle (R) optimal est celui qui présente la plus grande différence d'intensité dans les 2 cercles.

On applique le même type d'algorithme pour les formes plus complexes mais il y a alors plus de paramètres.

On explique maintenant comment on peut effectuer la mise en correspondance des ombres et des gouttes.

La figure 2A a déjà été commentée ci-dessus. Sur la figure 2B, on voit le résultat d'un algorithme de mise en correspondance des gouttes et des ombres de la figure 2A.

Selon cet algorithme de mise en correspondance, on cherche à associer 2 ombres de l'image à une goutte également visible sur l'image. Cette association résulte en une triplette (ombre 1, ombre 2, goutte). Mais il peut également y avoir des paires d'ombres qui sont associées à des gouttes non visibles sur l'image. On constitue alors une paire (ombre 1, ombre 2).

Dans une première étape, on constitue tous les groupements possibles soit de 2 ombres, soit de 2 ombres et une goutte.

Dans une deuxième étape, on analyse chacun de ces groupements pour leur associer un coût ou plutôt son complément, un «score»). Le groupement de plus faible coût sera considéré comme le plus probable et donc sera retenu. Le coût d'un groupement peut être une fonctionnelle de 3 facteurs, par exemple la somme, ou le produit de l'exponentielle de ces 3 facteurs. Les 3 facteurs sont calculés selon les 3 critères suivants, l'énoncé de ces critères faisant référence à la ligne de base qui est la ligne passant par les 2 sources lumineuses :

- 2 ombres et une goutte associées dans une triplette, ont des dispositions cohérentes dans la dimension de la ligne de base. Par exemple, si la goutte est dans le plan perpendiculaire à la ligne de base et équidistant des sources lumineuses, Les 2 ombres doivent être équidistantes de la goutte. Compte tenu de la géométrie du système mentionnée ci-dessus, quelle que soit la position de la goutte dans l'espace, l'image de la goutte est quasiment sur l'axe médian entre les 2 ombres. L'augmentation de la distance entre l'image de la goutte et l'axe médian des ombres augmente le coût de la triplette (1er facteur).
- 2 ombres associées (dans une triplette ou une paire), sont disposées suivant une direction parallèle à la ligne de base. L'éloignement de cette ligne de base augmente le coût associé à ce critère (2eme facteur) ;
- 2 ombres associées (dans une triplette ou une paire), ont des surfaces comparables, mais pas nécessairement identiques à cause de la dissymétrie des ombres, si la goutte ne se trouve pas dans le plan vertical médian des sources lumineuses.. Plus les surfaces sont différentes, plus le coût de la paire augmente (3eme facteur).

On peut combiner les critères ci-dessus avec le critère suivant :

- chaque ombre et chaque goutte appartient à un seul triplet ou une seule paire.

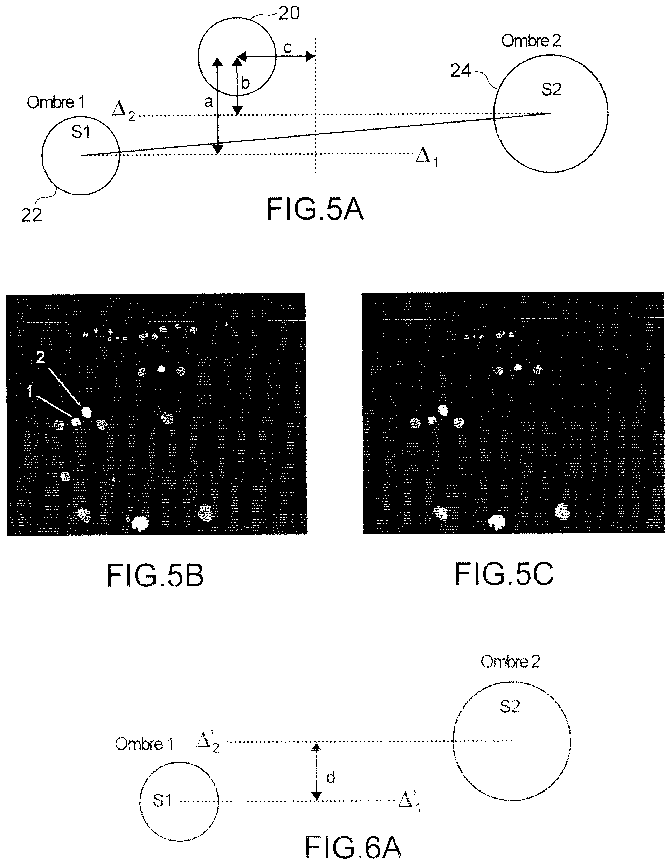

Un exemple concerne le cas d'une triplette goutte 20 - ombre 22 - ombre 24, telle que schématisée en figure 5A ; on désigne par :

- $\Delta 1$, respectivement $\Delta 2$, les droites qui passent par le centre de l'ombre 22, respectivement 24, et qui sont parallèles à la ligne de base ;
- a, respectivement b, la distance entre le centre de la goutte 20 et $\Delta 1$, respectivement $\Delta 2$ ;
- c la distance entre le centre de la goutte 20 et le plan médian des 2 ombres;

Les 3 critères formulés ci-dessus peuvent être traduits en fonction des paramètres a, b, c et en fonction du nombre de pixels S1, respectivement S2, de l'ombre 22, respectivement 24.

Selon une réalisation, on calcule le « score » pour cette triplette 20 - 22- 24 de la manière suivante :

$$\text{Score (triplette)} = \exp\left(-\frac{c^2}{coeff\,1}\right) * \exp\left(-\frac{(a-b)^2}{coeff\,2}\right) * \exp\left(-\frac{(S_2/S_1)^2}{coeff\,3}\right)$$

Ainsi, le score vaut 1 lorsque la goutte et les ombres sont alignées (a = b) et que la goutte 20 se situe au milieu des deux ombres 22, 24 (c = 0), qui sont elles-mêmes de surface identique (S1=S2) ; le score décroît lorsque l'on s'éloigne de cette configuration idéale. Le score peut être mis à zéro pour certaines conditions, par exemple lorsque le rapport des surfaces entre S1 et S2 est supérieur à une valeur donnée, par exemple supérieure à ¼, ou lorsque la goutte 20 est beaucoup plus proche d'une ombre que de l'autre, par exemple 4 fois plus proche.

Les coefficients de chacun des critères (coeff1, coeff2 et coeff3) peuvent être fixés arbitrairement, pour donner à chaque critère (ici, à chaque exponentielle) un poids relatif à son importance dans le calcul du score.

Pour des essais, ces coefficients ont été fixés à respectivement 200, 6000 et 5 (les distances étant exprimées en pixels). Les figures 5B et 5C montrent le résultat de l'appariement des triplets. L'algorithme a réussi à trouver les deux bonnes ombres pour chaque goutte, même en haut de l'image, où il y a 11 ombres en compétition pour seulement 2 gouttes.

On voit également que les gouttes $20_1$ et $20_2$ ont un score maximal avec les mêmes ombres. Cela est dû au fait que la 2ème ombre de la goutte $20_2$ n'est pas présente sur l'image de départ. On peut éliminer la mauvaise goutte en comparant les scores obtenus par les 2 triplets : le score le plus grand correspond au triplet le plus probable que l'on retient au final.

Selon un autre exemple, dans le cas d'un doublet ombre 22 - ombre 24, tel que schématisé en figure 6A, on désigne par $\Delta'_1$, respectivement $\Delta'_2$, les droites qui passent par le centre de l'ombre 22, respectivement 24, avec une distance minimale d entre $\Delta'_1$ et $\Delta'_2$.

Selon une réalisation, on calcule le « score » pour ce doublet 20 - 22- 24 de la manière suivante :

$$\text{Score (doublet)} = \exp\left(-\frac{d^2}{coeff\,1}\right) * \exp\left(-\frac{(S_2/S_1)}{coeff\,3}\right)$$

Ainsi, le score est maximal et vaut 1 lorsque les ombres sont parfaitement alignées horizontalement (d = 0) et que leur surface est identique (S1=S2).

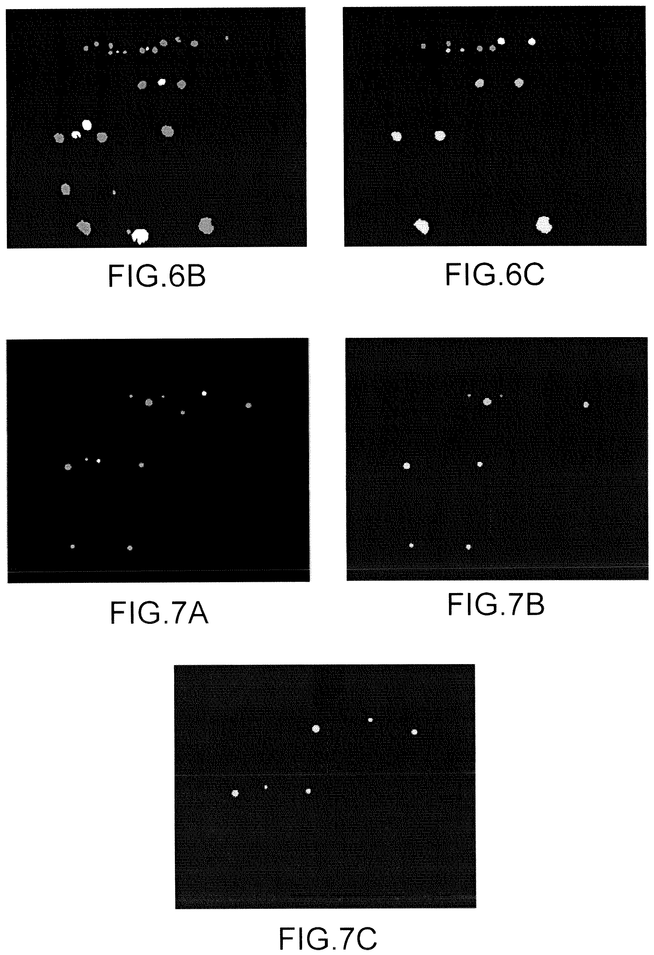

Les coefficients coeff1 et coeff2 sont les mêmes que précédemment. Les figures 6B et 6C montrent le résultat de l'appariement des doublets d'ombres. Seuls les doublets de score maximal ont été gardés, pour lesquels aucune des deux ombres n'appartient à un autre doublet de score maximal. Tous les doublets trouvés correspondent bien à des ombres issues d'une même goutte. Les ombres qui ne pouvaient pas être appariées ont même été éliminées.

On comprend donc que l'on peut utiliser les critères énoncés ci-dessus en les exprimant fonction :

- des paramètres géométriques qui expriment les distances et le positionnement relatif entre une goutte et/ou ses ombres ou entre 2 ombres ;
- et de la taille des ombres.

La figure 2B illustre le résultat de la mise en œuvre d'un tel algorithme pour l'image de la figure 2A.

La figure 7A est une image sur laquelle les objets (gouttes ou ombres) capturés par la caméra sont modélisés par des disques.

Les figures 7B, respectivement 7C, indiquent quels « objets » de la figure 7A, sont associés ou appareillés lorsque, successivement, on applique un appareillage par doublet, respectivement par triplet.

Un procédé selon l'invention permet d'estimer des paramètres tels que la taille des gouttes (quand il s'agit d'un modèle de goutte sphériques) ou le petit diamètre et le grand diamètre (quand il s'agit d'un modèle de goutte en forme d'ellipsoïde ou proche d'un d'ellipsoïde), et/ou la localisation des gouttes dans l'espace.

Pour relier ces informations aux mesures en pixels représentés sur la figure, il peut être utile de procéder à une calibration préalable de la taille des pixels, par exemple en unités métriques.

Selon un autre aspect de l'invention, un procédé a donc été élaboré pour réaliser une calibration de la taille des pixels de l'écran 8 (figure 1) sur lequel les ombres des gouttelettes sont projetées.

En effet, sur l'image formée par la caméra, les coordonnées d'intérêt sont mesurées en pixels. Sur l'écran, elles le sont en millimètres. On appelle ici calibration le procédé qui va permettre de relier les coordonnées en pixels, sur l'image de la caméra, et les coordonnées métriques, mesurées sur l'écran.

Le procédé mis en œuvre se base sur le procédé décrit par Salvi, Pattern Récognition, 35 (2002), 1617-1635.

On considère d'abord un point de l'image, de coordonnées $(X_{pix}, Y_{pix})$ exprimées en pixels, et de coordonnées $(X_s, Y_s)$ sur l'écran, en unités métriques. On suppose que, entre l'écran et la caméra, la propagation de la lumière est linéaire.

On peut alors écrire la relation suivante, entre les deux types de coordonnées :

$$\begin{pmatrix} X_{pix} \\ Y_{pix} \end{pmatrix} = A \begin{pmatrix} X_s \\ Y_S \end{pmatrix}$$

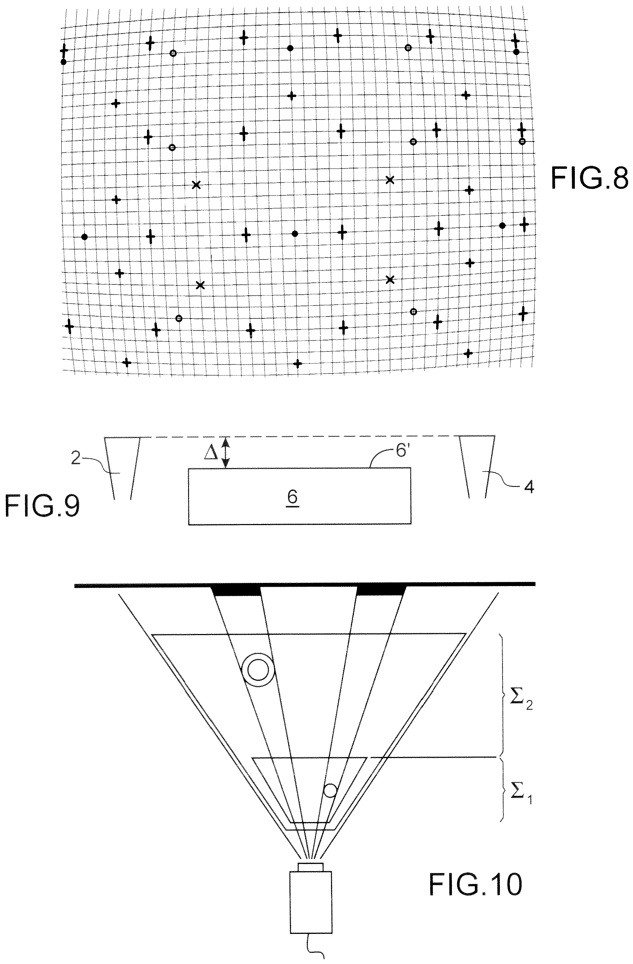

Pour déterminer les éléments de la matrice A, on utilise un certain nombre de points, tels que ceux qui sont identifiés par une croix (+) sur l'écran, en figure 8.

De préférence, on sélectionne les points qui sont proches du centre de l'écran : en effet, c'est proche de l'axe optique de la caméra que le modèle linéaire de propagation des rayons lumineux est le plus juste.

Pour réduire les incertitudes, on utilise plus de 3 points. On peut, en outre, utiliser une procédure d'optimisation par les moindres carrés.

Un autre problème est le suivant : plus on s'éloigne de l'axe optique, plus le modèle de propagation linéaire est mis en défaut, à cause de l'optique de la caméra. On voit sur la figure 8 que l'image de l'écran est concave, avec une distorsion qui s'accroît, en fonction de la distance au centre de l'image.

Pour remédier à ce problème, on peut utiliser une méthode de correction telle que celle proposée par Faugeras (1986, IEEE Computer vision and pattern recognition).

Par conséquent, les coordonnées métriques corrigées vont être reliées aux coordonnés en pixels, de la manière suivante :

$$\begin{pmatrix} X_u \\ Y_u \end{pmatrix} = A^{-1} \begin{pmatrix} X_{pix} \\ Y_{pix} \end{pmatrix} + \begin{pmatrix} \delta_x \\ \delta_y \end{pmatrix}$$

avec :

$$\delta x = k \, X_{pix} \, (X_{pix}^2 + Y_{pix}^2)$$

$$\delta y = k \, Y_{pix} \, (X_{pix}^2 + Y_{pix}^2)$$

où k est une constante.

Cette dernière peut être obtenue par l'optimisation d'un système d'équations, par exemple en prenant les coordonnées métriques et en pixels des points identifiés par des « o » sur la figure 8. Les points identifiés par des « x » sur cette même figure sont utilisés pour vérification des calculs.

Là encore, on peut utiliser un nombre de points supérieur à ce qui est strictement nécessaire du point de vue mathématique ; ainsi, on peut utiliser par exemple 9 points, nombre qui semble être un bon compromis entre un système purement linéaire et un système qui prend en compte les distorsions radiales, mais avec beaucoup plus de points. Le nombre de points optimal résulte d'un compromis entre l'erreur sur la localisation des points et le temps nécessaire pour réaliser la calibration. Une calibration avec 9 points pour paramétrer le modèle non linéaire est un bon compromis entre l'erreur sur la localisation des pixels et la complexité de la calibration.

C'est ainsi qu'on a pu constater les erreurs moyennes suivantes, entre les positions réelles des « x » et celles calculées par le modèle de calibration exposé ci-dessus, pour un système purement linéaire :

- une erreur moyenne de 1,6 mm, avec 21 points,
- une erreur moyenne de 0,5 mm avec 9 points,
- une erreur moyenne de 0,4 mm avec 21 points.

Par conséquent, on comprend que l'on peut utiliser un modèle d'étalonnage purement linéaire, avec, ou sans, correction de distorsion radiale.

Ce procédé de calibration peut être utilisé pour tout écran mis en œuvre avec une caméra.

Des moyens électroniques 16 tels qu'un micro-ordinateur ou un calculateur sont programmés pour mémoriser et traiter les données issues de la caméra. Plus précisément une unité centrale 17 est programmée pour mettre en œuvre un procédé selon l'invention tel que décrit ci-dessus ou ci-dessous : calibrer l'écran et/ou calculer la, ou les, taille(s) et/ou la, ou les, forme(s) des gouttes, selon un procédé tel qu'expliqué ci-dessus et/ou mettre en œuvre un algorithme de classification comme expliqué ci-dessus, et/ou mettre en œuvre un algorithme d'association des gouttes et des ombres comme expliqué ci-dessus et/ou calculer une représentation tridimensionnelle de gouttes comme expliqué ci-dessous.

Les moyens électroniques 16 permettent éventuellement un contrôle du déclenchement des sources de rayonnement et/ou de la caméra, par exemple une synchronisation de l'ensemble de ces moyens.

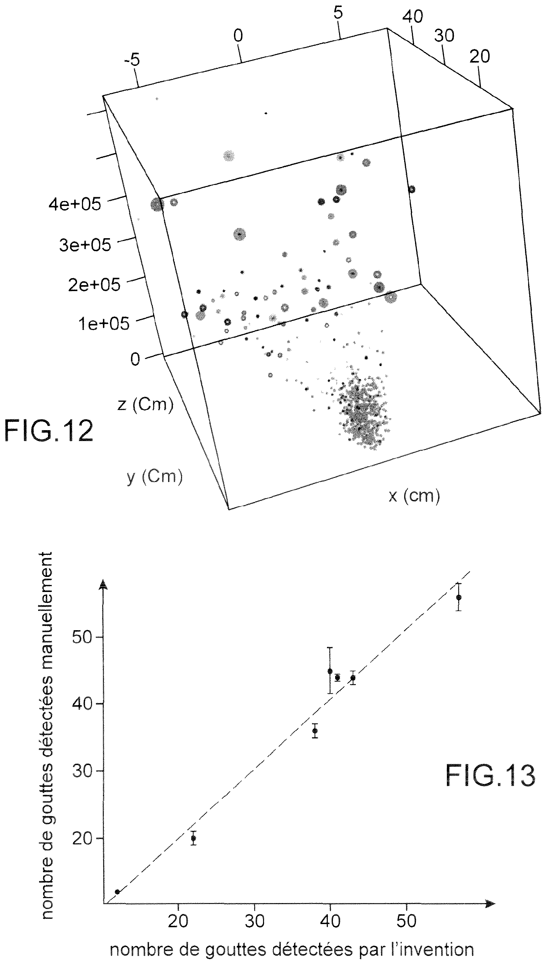

Un écran ou des moyens 19 d'affichage ou de visualisation permettent, après traitement, de représenter l'image vue par la caméra et/ou la représentation tridimensionnelle des gouttes et/ou d'autres informations, par exemple des informations relatives à des paramètres de la mesure et/ou qui permettent d'identifier l'image (par exemple, une information de date et/ou d'heure, et/ou un numéro d'essai,...etc). Un exemple d'une représentation tridimensionnelle est donné en figure 12 et sera commenté plus loin.

Selon un autre aspect, une disposition avantageuse des sources, par rapport à la caméra est illustrée en figure 9.

Un plan, qui passe par la surface émettrice des sources, est situé à une distance Δ de quelques centimètres en avant du plan de la surface d'entrée 6' de la caméra. Une distance Δ comprise entre 1 et 4 cm, par exemple d'environ 3 cm, paraît comme étant particulièrement intéressante. Une telle distance permet, à la fois, d'obtenir une ombre plus grande, pour une taille de goutte donnée, ce qui augmente la surface d'échantillonnage des plus petites gouttes. D'une manière générale, dans la configuration de la figure 9 ou dans toute autre configuration, les sources de rayonnement seront les plus proches possibles de l'axe de la caméra.

Un dispositif selon l'invention permet d'obtenir des performances de comptage particulièrement intéressantes.

On va montrer qu'il est capable d'échantillonner des gouttes à une résolution temporelle de l'ordre de 10 secondes, ou moins.

On définit la durée d'échantillonnage comme étant le temps nécessaire pour échantillonner un nombre suffisant de gouttes dans une certaine gamme de diamètre. Habituellement, on considère que ce nombre est de 30. Ici, par précaution, on choisit un nombre de 100 .

On a la relation suivante, entre une surface S donnée, un nombre de gouttes Ns(D) donné, une vitesse V(D) des gouttes, une durée Δt donnée :

$$N_S(D) = N(D) \times \Delta t \times V(D) \times S(D).$$

Comme expliqué ci-dessus, le nombre Ns(D) est choisi égal à 100.

N(D) est la densité de gouttes par unité de gamme de diamètre et par $m^3$ ;
Tant la vitesse V que la surface S dépendent de D.

En général, la vitesse V est liée au diamètre par une relation de type :

$$V(D) = aD^b.$$

En ce qui concerne la surface S, le schéma de la figure 10 permet de comprendre en quoi elle est liée à la taille des gouttes.

La surface d'échantillonnage est définie comme étant la région dans laquelle le diamètre des ombres qui sont projetées sur l'écran est supérieur à 10 pixels (ceci permet d'assurer une incertitude, sur le diamètre des gouttes, inférieure à 10 %).

Comme on peut le comprendre d'après le schéma de la figure 10 une ombre d'un diamètre donné sur l'écran correspond à une goutte d'une taille relativement importante, située à proximité de l'écran, ou à une goutte de taille plus petite, plus éloignée de l'écran.

Ceci explique que la surface d'échantillonnage dépend du diamètre de goutte considéré.

Ainsi, en figure 10 la zone $\Sigma_1$ est la surface d'échantillonnage pour des gouttes de petit diamètre, tandis que la zone $\Sigma_2$, plus importante, est la surface d'échantillonnage pour des diamètres plus grands (en considérant une surface minimale des ombres de 10 pixels).

La dépendance de la surface d'échantillonnage en fonction de la taille des gouttes, combinée avec la distribution non uniforme des diamètres de gouttes, conduit à une évolution non linéaire de la durée d'échantillonnage en fonction de la taille des gouttes.

Un calcul numérique de la durée d'échantillonnage a été réalisé. Les paramètres du modèle utilisé pour ce calcul sont les suivants :

- les gouttes sont classées par diamètre, avec un pas de 0,2 mm,
- la géométrie du capteur est la suivante : distance entre écran et caméra : 0,6 m ; largeur de l'écran : 0,2 m ; nombre de pixels : 800 ; vitesse de prise de vue : 25 images/s.

A partir de ces paramètres, on peut déduire le diamètre des ombres sur l'écran, en fonction de la localisation des gouttes et des tailles des gouttes.

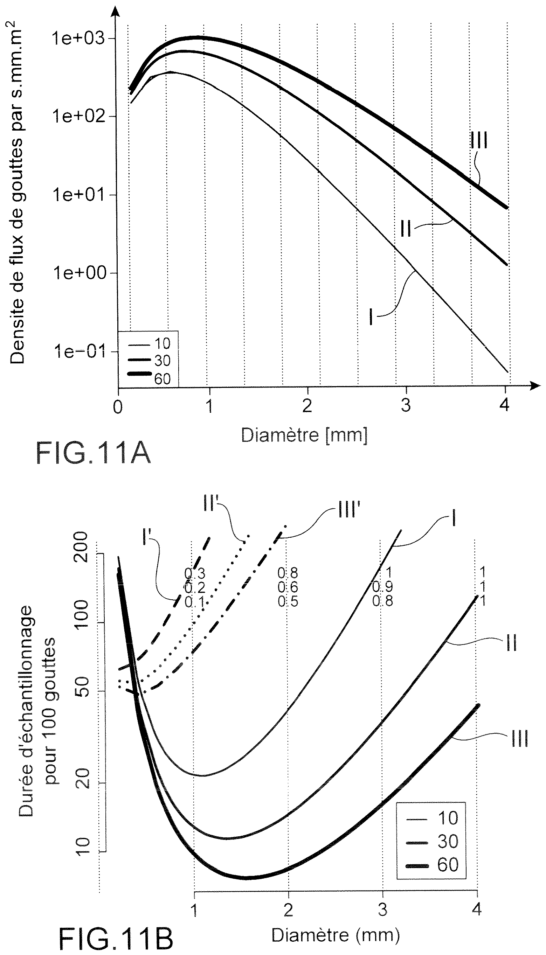

La figure 11A représente, pour 3 intensités de la pluie (courbe I : 10mm/h, courbe II : 30 mm/h, courbe III : 60 mm/h), la densité du flux de gouttes (en nombre de gouttes/s.mm.m$^2$) en fonction du diamètre D des gouttes. Elle indique par exemple que, si on considère toutes les gouttes de diamètre compris entre 0.8 et 1 mm, 0.2 gouttes traversent une surface de 1m$^2$ par seconde.

La figure 11B représente, pour les mêmes intensités de la pluie, avec la même numérotation des courbes, le temps d'échantillonnage nécessaire pour mesurer 100 gouttes par gamme de 0.2mm de diamètre en fonction de leur diamètre.

Cette figure 11B montre un comportement qui va à l'encontre d'une approche intuitive : Les gouttes les plus larges, bien que disposant d'une surface d'échantillonnage $\Sigma_2$ plus large nécessitent les plus longues durées d'échantillonnage. En effet, pour des diamètres en deçà de 0.8 mm, les gouttes ne précipitent quasiment pas et ne sont pas considérées comme de la pluie.

On peut noter aussi que, dans le cas d'un disdromètre optique à faisceau parallèle, la surface d'échantillonnage est indépendante de la taille des hydrométéores. Les courbes en traits tiretés, pointillés et tiretés-pointillés indiquent le temps d'échantillonnage pour un appareil dont la surface d'échantillonnage et constante et de taille 3 cm x 18 cm (taille du faisceau du disdromètre Parsivel cité plus haut). On voit, sur la figure 11B, que pour les gouttes précipitantes supérieures à 0.8 mm de diamètre, la durée d'échantillonnage peut être au moins 10 fois plus élevée pour le disdromètre à surface d'échantillonnage constante que pour le présent dispositif.

Sur cette figure les chiffres disposés sur les lignes verticales, à chaque valeur entière du diamètre (1, 2, 3, 4 mm), indiquent la proportion de masse d'eau si on intègre toutes les gouttes de 0 au diamètre considéré par rapport à la masse d'eau totale de la distribution. Par exemple, pour une averse de 30 mm/h, si on intègre la masse de toutes les gouttes de 0 à 3 mm de diamètre, cette masse représente 90% de la masse d'eau que contient toute la distribution des gouttes. Cette figure permet de comprendre les performances du dispositif selon l'invention, en termes de durée d'échantillonnage. Si on considère une précipitation d'intensité 30 mm/h, 50 s sont nécessaires pour échantillonner 90% de l'eau, avec plus de 100 gouttes collectées dans chaque tranche de 0,2 mm de diamètre, et ce jusqu'à 3 mm de diamètre (moins de 10 secondes pour 30 gouttes par tranche). Par comparaison, les courbes en traits interrompus I', II', III' (courbe I' : 10mm/h, courbe II' : 30 mm/h, courbe III' : 60 mm/h) indiquent que, pour un capteur (de type « Parsivel »), de surface d'échantillonnage $0,18 \times 0,03$ m$^2$, indépendante de la taille des gouttes, on échantillonne, pendant la même durée, moins de 20 % de la pluie. Il faut noter que la surface d'échantillonnage du disdromètre optique à faisceau parallèle ne peut pas être augmentée car elle augmenterait la probabilité que plusieurs gouttes interfèrent dans la surface de détection. On voit donc qu'un dispositif selon l'invention dispose de performances de comptage nettement supérieures à celle d'un dispositif classique.

Enfin un dispositif selon l'invention permet de réaliser des représentations tridimensionnelles des gouttes, telle que celle de la figure 12. A cette fin, on utilise les données issues des mesures réalisées à l'aide des 2 sources 2, 4 : la distance entre 2 ombres d'une même goutte permet de calculer la distance goutte 20 - écran 8 et de calculer les dimensions réelles de la goutte. On peut ainsi calculer la position de la goutte en 3 dimensions.

On a réalisé des mesures comparatives, entre des résultats obtenus avec un dispositif selon l'invention, et des résultats de comptages réalisés manuellement.

Le dispositif de mesure selon l'invention utilisé pour ces mesures présente la structure illustrée en figure 1A avec 2 sources 2, 4, chacune ayant une ouverture de 180° ; la distance entre l'écran et le plan qui passe par la surface émettrice des sources et qui est parallèle à l'écran est de 59 cm.

Ainsi, on a lâché des gouttes d'eau avec une seringue depuis le 3ème étage d'une cage d'escalier, le dispositif selon l'invention étant disposé au rez-de-chaussée. L'opérateur qui manipulait les seringues et celui qui manipulait le dispositif selon l'invention ont chacun compté le nombre de gouttes qui, à chaque essai, traversaient le volume du dispositif. Certaines gouttes heurtaient les marches de l'escalier et n'atteignait jamais le système de mesure.

Ce double comptage donne une mesure de l'incertitude sur le comptage.

La figure 13 compare le nombre de gouttes comptées manuellement et celui détecté par le dispositif selon l'invention. Le biais de la mesure est nul ($<10^{-8}$) et l'écart-type des résidus est inférieur à 5%.

La statistique de comptage est donc améliorée avec des sources lumineuses larges, conformément à la présente invention, par rapport à un dispositif tel que celui présenté dans le document de M. Desvignes et al. « Raindrops size and shape from videosonde and image processing », 2012, IEEE, p.1164-1167. En effet, cet article annonce une erreur, dans le comptage, d'au moins 10 %, alors que les mesures effectuées avec un dispositif selon l'invention montrent une erreur au plus égale à 5 %.

L'invention a été décrite dans le cas de la caractérisation de gouttes de pluie. Elle s'applique aussi à la caractérisation d'hydrométéores, par exemple lors de chutes de neige ou de glace.

**Revendications**

**1.** Dispositif de caractérisation de la taille et/ou de la forme d'hydrométéores, comportant :

- Une caméra (6) unique, présentant une surface d'entrée (6'), et un écran (8),
- Une première source (2) et une deuxième source (4) de rayonnement, l'angle d'émission de chacune des sources étant large, supérieur à 50°, ces sources (2, 4) de rayonnement étant destinées à être disposées de manière à éclairer l'écran (8) disposé en face de la caméra (6) et à y projeter des ombres d'hydrométéores tombant dans l'espace entre la caméra et l'écran,
- Des moyens (16,17) électroniques de traitement, programmés pour traiter les données d'au moins une image d'hydrométéores et/ou leurs ombres visualisée par la caméra et estimer au moins la taille et/ou de la forme des hydrométéores,

**caractérisé en ce que** :

- la caméra (6) est placée à une distance d'environ 50 cm de l'écran (8) qui a lui-même une taille d'environ 40 cm x 40 cm, et
- chacune des sources (2) et (4) a un champ d'illumination plus large que le champ que peut capter la caméra.

**2.** Dispositif selon la revendication 1, les moyens électroniques de traitement (16,17) étant en outre programmés :

- pour compter les hydrométéores, par exemple en fonction de leur taille, et/ou réaliser une représentation, en trois dimensions, d'un volume d'hydrométéores ou d'une répartition spatial d'hydrométéores ;
- et/ou pour réaliser un étalonnage, pour identifier des coordonnées métriques de points de l'écran et pour leur associer des pixels d'une image obtenue par la caméra, cet étalonnage mettant par exemple en œuvre un modèle linéaire, avec, ou sans, correction de distorsion radiale.

**3.** Dispositif selon l'une des revendications précédentes, les moyens électroniques de traitement (16,17) étant en outre programmés pour associer une ombre d'une image à une autre ombre de l'image, formant ainsi une paire d'ombres associées, et éventuellement à un hydrométéores de cette même image, formant ainsi une triplette de 2 ombres associées à un hydrométéore.

**4.** Dispositif selon la revendication précédente, les moyens électroniques de traitement (16,17) étant programmés pour que 2 ombres, et éventuellement un hydrométéore, soient associées, dans une triplette ou une paire, en fonction de leurs dispositions dans l'espace, et de leurs tailles, par exemple de sorte que :

- 2 ombres associées, dans une triplette ou une paire, sont disposées suivant une direction parallèle à celle qui relie les 2 sources ;
- 2 ombres associées, dans une triplette ou une paire, ont des tailles comparables ;

- 2 ombres et une goutte associées dans une triplette, ont des dispositions cohérentes dans l'image ;
- chaque ombre et chaque goutte appartient à un seul triplet ou une seule paire.

5. Dispositif selon l'une des revendications précédentes, au moins une des sources (2,4) de rayonnement comportant une diode sans optique de focalisation.

6. Dispositif selon l'une des revendications précédentes, les moyens (16,17) électroniques de traitement, étant en outre programmés pour estimer la forme des hydrométéores par :

- identification, dans une image visualisée par la caméra, des pixels appartement à une ombre d'un hydrométéore ou à un hydrométéore ;
- choix, pour chaque hydrométéore, d'une forme approchée de l'hydrométéore, cette forme approchée étant par exemple une sphère ou un ellipsoïde ;
- estimation des paramètres géométriques de cette forme approchée.

7. Procédé de caractérisation d'hydrométéores, mettant en œuvre un dispositif selon l'une des revendications précédentes, dans lequel :

- on éclaire des hydrométéores (20) à l'aide de la première et de la deuxième source de rayonnement, pour former des ombres sur l'écran (22,24) ;
- on visualise les hydrométéores et leur projection sur l'écran à l'aide de la caméra unique (6),
- on traite l'image à l'aide des moyens de traitement et on estime au moins la taille et/ou la forme des hydrométéores.

8. Procédé selon la revendication précédente, dans lequel les hydrométéores sont comptés, et/ou est représenté un volume d'hydrométéores en 3 dimensions ou une répartition spatiale d'hydrométéores.

9. Procédé selon l'une des revendications 7 ou 8, comportant, préalablement, une étape d'étalonnage, permettant d'identifier des coordonnées métriques de points de l'écran et de leur associer des pixels de l'image obtenue par la caméra, cet étalonnage étant par exemple réalisé à l'aide d'un modèle linéaire, avec, ou sans, correction de distorsion radiale.

10. Procédé selon l'une des revendications 7 à 9, dans lequel une ombre d'une image est associée à une autre ombre de l'image, formant ainsi une paire d'ombres associées, et éventuellement à une goutte de cette même image, formant ainsi une triplette de 2 ombres associées à un hydrométéore, 2 ombres, et éventuellement un hydrométéore, pouvant éventuellement être associés dans une triplette ou une paire, en fonction de leurs dispositions dans l'espace, et de leurs tailles.

11. Procédé selon la revendication précédente, dans lequel :

- 2 ombres, et éventuellement un hydrométéore, sont associés, dans une triplette ou une paire, en fonction :

  ◦ Des paramètres géométriques qui expriment les distances et le positionnement relatif entre une goutte et/ou ses ombres ou entre 2 ombres ;
  ◦ et en fonction de la taille des ombres ;

- et/ou

  ◦ 2 ombres associées, dans une triplette ou une paire, sont disposées suivant une direction parallèle à celle qui relie les 2 sources ;
  ◦ 2 ombres associées dans une triplette ou une paire, ont des tailles comparables ;
  ◦ 2 ombres et un hydrométéore associés dans une triplette, ont des dispositions cohérentes dans l'image ;
  ◦ chaque ombre et chaque goutte appartient à un seul triplet ou une seule paire.

12. Procédé selon l'une des revendications 7 à 11, l'estimation de la forme des hydrométéores comportant :

- l'identification, dans une image visualisée par la caméra, des pixels appartenant à une ombre d'hydrométéore ou à un hydrométéore ;

- le choix, pour chaque hydrométéore, d'une forme approchée de l'hydrométéore, cette forme approchée étant par exemple une sphère ou un ellipsoïde ;
- l'estimation des paramètres géométriques de cette forme approchée.

13. Procédé selon l'une des revendications 7 à 12, dans lequel un plan, qui passe par la surface émettrice des sources, est situé parallèlement au plan de la surface d'entrée de la caméra et à une distance de quelques centimètres en avant de celui-ci, comprise entre 1 et 4 cm.

14. Procédé selon la revendication 9, la caméra permettant de former une image de l'écran, ce dernier étant muni d'une grille pour identifier des coordonnées métriques de points de l'écran, l'étape d'étalonnage comportant :

- l'association d'une pluralité de points de l'image, de coordonnées ($X_{pix}$, $Y_{pix}$) exprimées en pixels, et de coordonnées ($X_s$, $Y_s$) sur l'écran, en unités métriques ;
- le calcul d'une relation entre les deux types de coordonnées.

15. Procédé selon la revendication 14, dans lequel on réalise :

- une étape de correction de distorsions radiales résultant du système optique de la caméra ;
- et/ou une étape d'estimation d'un nombre optimal, par exemple égal à 9, de points de l'écran en vue de réaliser l'étape d'étalonnage.

**Patentansprüche**

1. Vorrichtung zur Charakterisierung der Größe und/oder Form von Hydrometeoren, umfassend:

- eine einzelne Kamera (6), die eine Eintrittsoberfläche (6') und einen Bildschirm (8) aufweist,
- eine erste Quelle (2) und eine zweite Quelle (4) von Bestrahlung, wobei der Emissionswinkel von jeder der Quellen groß ist, größer als 50°, wobei diese Quellen (2, 4) von Bestrahlung dazu bestimmt sind, auf eine Weise angeordnet zu werden, um den vor der Kamera (6) angeordneten Bildschirm (8) zu beleuchten und Schatten von Hydrometeoren darauf zu projizieren, die in den Raum zwischen der Kamera und dem Bildschirm fallen,
- elektronische Behandlungsmittel (16,17), programmiert, um Daten von mindestens einem Bild von Hydrometeoren und/oder deren durch die Kamera visualisierte Schatten zu behandeln, und um mindestens die Größe und/oder die Form der Hydrometeoren abzuschätzen, **dadurch gekennzeichnet, dass**:

- die Kamera (6) in einem Abstand von ungefähr 50 cm vom Bildschirm (8) platziert wird, der seinerseits eine Größe von ungefähr 40 cm x 40 cm aufweist und
- jede der Quellen (2) und (4) ein Beleuchtungsfeld größer als das Feld, das die Kamera einfangen kann, aufweist.

2. Vorrichtung nach Anspruch 1, wobei die elektronischen Behandlungsmittel (16,17) des Weiteren programmiert sind:

- um die Hydrometeore zu zählen, zum Beispiel entsprechend ihrer Größe, und/oder eine Darstellung in drei Dimensionen eines Volumens von Hydrometeoren oder einer räumlichen Verteilung von Hydrometeoren zu verwirklichen;
- und/oder eine Kalibrierung zum Identifizieren der metrischen Koordinaten von Punkten des Bildschirms zu verwirklichen und sie den Pixeln eines durch die Kamera erhaltenen Bilds zuzuweisen, wobei die Kalibrierung zum Beispiel ein lineares Modell mit oder ohne Korrektur der radialen Verzerrung anwendet.

3. Vorrichtung nach einem der vorstehenden Ansprüche, wobei die elektronischen Behandlungsmittel (16,17) des Weiteren programmiert sind, um einen Schatten von einem Bild einem anderen Schatten von dem Bild, wodurch ein Paar von assoziierten Schatten gebildet wird, und gegebenenfalls einem Hydrometeoren des gleichen Bilds zuzuweisen, wodurch ein Triplett von 2 mit einem Hydrometeor assoziierten Schatten gebildet wird.

4. Vorrichtung nach einem der vorstehenden Ansprüche, wobei die elektronischen Behandlungsmittel (16,17) programmiert sind, damit 2 Schatten und gegebenenfalls ein Hydrometeor entsprechend ihrer Anordnungen im Raum und ihrer Größen in einem Triplett oder einem Paar assoziiert werden, zum Beispiel so, dass:

- 2 in einem Triplett oder einem Paar assoziierte Schatten entlang einer Richtung parallel zu jener, die die 2 Quellen verbindet, angeordnet werden;
- 2 in einem Triplett oder einem Paar assoziierte Schatten vergleichbare Größen aufweisen;
- 2 Schatten und ein Tropfen, die in einem Triplett assoziiert sind, in dem Bild kohärente Anordnungen aufweisen;
- jeder Schatten und jeder Tropfen zu einem einzigen Triplett oder einem einzigen Paar gehören.

5. Vorrichtung nach einem der vorstehenden Ansprüche, wobei mindestens eine der Quellen (2,4) von Bestrahlung eine Diode ohne Fokussierungsoptik umfasst.

6. Vorrichtung nach einem der vorstehenden Ansprüche, wobei die elektronischen Behandlungsmittel (16,17) des Weiteren programmiert sind, um die Form der Hydrometeoren abzuschätzen durch:

- Identifikation, in einem durch die Kamera visualisierten Bild, von Pixeln, die zu einem Schatten eines Hydrometeors oder einem Hydrometeor gehören;
- Auswahl, für jeden Hydrometeor, einer angenäherten Form des Hydrometeors, wobei diese angenäherte Form zum Beispiel eine Kugel oder ein Ellipsoid ist;
- Abschätzung von geometrischen Parametern dieser angenäherten Form.

7. Verfahren zur Charakterisierung von Hydrometeoren, das eine Vorrichtung nach einem der vorstehenden Ansprüche anwendet, wobei:

- Hydrometeoren (20) mithilfe der ersten und der zweiten Quelle von Bestrahlung beleuchtet werden, um Schatten auf dem Bildschirm (22,24) zu bilden;
- die Hydrometeoren und deren Projektion auf dem Bildschirm mithilfe der einzelnen Kamera (6) visualisiert werden,
- das Bild mithilfe von Behandlungsmitteln behandelt wird und mindestens die Größe und/oder die Form von Hydrometeoren abgeschätzt werden.

8. Verfahren nach dem vorstehenden Anspruch, wobei die Hydrometeoren gezählt werden und/oder ein Volumen von Hydrometeoren in 3 Dimensionen oder eine räumlichen Verteilung von Hydrometeoren dargestellt wird.

9. Verfahren nach einem der Ansprüche 7 oder 8, umfassend, vorhergehend, einen Kalibrierungsschritt, der erlaubt, metrische Koordinaten von Punkten des Bildschirms zu identifizieren und sie den Pixeln des durch die Kamera erhaltenen Bilds zuzuweisen, wobei die Kalibrierung zum Beispiel mithilfe eines linearen Modells mit oder ohne Korrektur der radialen Verzerrung verwirklicht wird.

10. Verfahren nach einem der Ansprüche 7 bis 9, wobei ein Schatten von einem Bild mit einem anderen Schatten von dem Bild, wodurch ein Paar von assoziierten Schatten gebildet wird, und gegebenenfalls mit einem Tropfen dieses gleichen Bilds assoziiert wird, wodurch ein Triplett von 2 mit einem Hydrometeor assoziierten Schatten gebildet wird, wobei 2 Schatten und gegebenenfalls ein Hydrometeor entsprechend ihren Anordnungen im Raum und ihren Größen gegebenenfalls in einem Triplett oder einem Paar assoziiert sein können.

11. Verfahren nach dem vorstehenden Anspruch, wobei:

- 2 Schatten und gegebenenfalls ein Hydrometeor in einem Triplett oder einem Paar assoziiert sind, entsprechend:

o geometrischen Parametern, die die Abstände und die relative Positionierung zwischen einem Tropfen und/oder seinen Schatten oder zwischen 2 Schatten ausdrücken;
o und entsprechend der Größe der Schatten;

- und/oder

o 2 in einem Triplett oder einem Paar assoziierte Schatten entlang einer Richtung parallel zu jener, die die 2 Quellen verbindet, angeordnet werden;
o 2 in einem Triplett oder einem Paar assoziierte Schatten vergleichbare Größen aufweisen;
o 2 Schatten und ein Hydrometeor, die in einem Triplett assoziiert sind, in dem Bild kohärente Anordnungen aufweisen;

o jeder Schatten und jeder Tropfen zu einem einzigen Triplett oder einem einzigen Paar gehören.

12. Verfahren nach einem der Ansprüche 7 bis 11, wobei die Abschätzung der Form der Hydrometeoren umfasst:

- die Identifikation, in einem durch die Kamera visualisierten Bild, von Pixeln, die zu einem Hydrometeorschatten oder einem Hydrometeor gehören;
- die Auswahl, für jeden Hydrometeor, einer angenäherten Form des Hydrometeors, wobei diese angenäherte Form zum Beispiel eine Kugel oder ein Ellipsoid ist;
- die Abschätzung von geometrischen Parametern dieser angenäherten Form.

13. Verfahren nach einem der Ansprüche 7 bis 12, wobei eine Ebene, die durch die emittierende Oberfläche der Quellen hindurchgeht, sich parallel zu der Ebene der Eintrittsoberfläche der Kamera und in einem Abstand von einigen Zentimetern im Bereich zwischen 1 und 4 cm vor dieser befindet.

14. Verfahren nach Anspruch 9, wobei die Kamera erlaubt, ein Bild des Bildschirms zu bilden, wobei dieser Letztere mit einem Gitter zum Identifizieren von metrischen Koordinaten von Punkten des Bildschirms ausgestattet ist, wobei der Kalibrierungsschritt umfasst:

- die Assoziierung einer Vielzahl von Punkten des Bilds, von in Pixeln ausgedrückten Koordinaten ($X_{pix}$, $Y_{pix}$) und von Koordinaten ($X_s$, $Y_s$) auf dem Bildschirm, in metrischen Einheiten;
- die Berechnung einer Beziehung zwischen den zwei Arten von Koordinaten.

15. Verfahren nach Anspruch 14, wobei verwirklicht wird:

- ein Korrekturschritt von radialen Verzerrungen, die aus dem optischen System der Kamera resultieren;
- und/oder ein Abschätzungsschritt einer optimalen Anzahl, zum Beispiel gleich 9, von Punkten des Bildschirms zwecks Verwirklichen des Kalibrierungsschritts.

## Claims

1. Device for characterising the size and/or the form of hydrometeors, comprising:

- a single camera (6), having an input surface (6') and a screen (8),
- a first source (2) and a second source (4) of radiation, the emission angle of each of the sources being large, greater than 50°; said sources of radiation (2, 4) being intended to be arranged so as to illuminate the screen (8) arranged facing the camera (6) and to project shadows of hydrometeors falling in the space between the camera and the screen,
- electronic processing means (16, 17) programmed to process the data of at least one image of hydrometeors and/or their shadows visualised by the camera, and to estimate at least the size and/or form of the hydrometeors,

**characterised in that**

- the camera (6) is placed at a distance of approximately 50 cm from the screen (8) which itself has a size of approximately 40 cm x 40 cm, and
- each of the sources (2) and (4) has a larger illumination field than the field that the camera can capture.

2. Device according to claim 1, the electronic processing means (16, 17), also being programmed:

- to count the hydrometeors, for example as a function of their size, and/or to make a representation, in three dimensions, of a volume of hydrometeors or a spatial distribution of hydrometeors;
- and/or to perform a calibration, to identify metric coordinates of points of the screen and to associate therewith pixels of an image obtained by the camera, said calibration using for example a linear model, with or without the correction of radial distortion.

3. Device according to any of the preceding claims, the electronic processing means (16, 17) also being programmed to associate one shadow of an image to another shadow of the image, thus forming a pair of associated shadows, and possibly to a hydrometeor of this same image, thus forming a triplet of 2 shadows associated with one hydrometeor.

4. Device according to the preceding claim, the electronic processing means (16, 17) being programmed so that 2 shadows, and possibly one hydrometeor, are associated, in a triplet or a pair, as a function of their arrangements in space and their sizes, for example such that:

- 2 associated shadows, in a triplet or a pair, are arranged according to a direction parallel to the one which connects the two 2 sources;
- 2 associated shadows, in a triplet or a pair, have comparable sizes;
- 2 shadows and a drop associated in a triplet, have consistent arrangements in the image;
- each shadow and each drop belong to a single triplet or a single pair.

5. Device according to any of the preceding claims, at least one or the sources (2, 4) of radiation comprising a diode without focusing optics.

6. Device according to any of the preceding claims, the electronic processing means (16, 17), also being programmed to estimate the form of the hydrometeors by:

- identifying, in an image visualised by the camera, pixels belonging to a shadow of a hydrometeor or to a hydrometeor;
- selecting for each hydrometeor an approximate form of the hydrometeor, this approximate form of a hydrometeor being for example a sphere or an ellipsoid;
- estimating geometric parameters of this approximate form.

7. Method for characterising hydrometeors, using a device according to any of the preceding claims, wherein:

- the hydrometeors (20) are illuminated by means of the first and the second source of radiation, to form shadows on the screen (22, 24);
- the hydrometeors and their projection are visualised on the screen by means of the single camera (6),
- the image is processed by processing means and at least the size and/or the form of the hydrometeors are estimated.

8. Method according to the preceding claim, wherein the hydrometeors are counted, and/or a volume of hydrometeors is represented in 3 dimensions or in a spatial distribution of hydrometeors.

9. Method according to any of claims 7 or 8, comprising previously a calibrating step, which makes it possible to identify metric coordinates of points of the screen and to associate them with pixels of the image obtained by the camera, this calibration being performed for example by means of a linear model, with or without a correction of radial distortion.

10. Method according to any of claims 7 to 9, wherein a shadow of one image is associated with another shadow of the image, thus forming a pair of associated shadows, and possibly with a drop of said image, thus forming a triplet of two 2 shadows associated with a hydrometeor, 2 shadows and possibly one hydrometeor possibly being associated in a triplet or a pair, according to their arrangements in space and their sizes.

11. Method according to the preceding claim, wherein:

- 2 shadows, and possibly a hydrometeor, are associated, in a triplet or a pair, according to:

o geometric parameters which express the distances and the relative positioning between a drop and/or its shadows or between 2 shadows;
o and according to the size of the shadows;
and/or
o 2 associated shadows, in a triplet or a pair, are arranged in a direction parallel to the one connecting the 2 sources;
o 2 associated shadows in a triplet or a pair have comparable sizes;
o 2 shadows and a hydrometeor associated in a triplet have consistent arrangements in the image;
o each shadow and each drop belongs to a single triplet or a single pair.

**12.** Method according to any of claims 7 to 11, the estimation of the form of the hydrometeors comprising:

- identifying in an image visualised by the camera, pixels belonging to a hydrometeor shadow or a hydrometeor;
- selecting, for each hydrometeor, a form close to the hydrometeor, this approximate form being for example a sphere or an ellipsoid;
- estimating geometric parameters of this approximate form.

**13.** Method according to any of claims 7 to 12, wherein a plane, which passes through the emitting surface of sources, is located parallel to the plane of the input surface of the camera and at a distance of several centimetres before this, comprises between 1 and 4 cm.

**14.** Method according to claim 9, the camera making it possible to form a screen image, the latter being equipped with a grid for identifying metric coordinates of points of the screen, the calibration step comprising:

- associating a plurality of points of the image, coordinates ($X_{pix}$, $Y_{pix}$) expressed in pixels, and coordinates ($X_s$, $Y_s$) on the screen, in metric units;
- calculating a relationship between the two types of coordinates.

**15.** Method according to claim 14, wherein:

- a step is of correcting radial distortions resulting from the optical system of the camera is performed;
- and/or a step is of estimating an optimal number is performed, for example equal to 9, of points of the screen in order to perform the calibration step.

FIG.1A

2

6

4

FIG.1B

2

6

4

FIG.1C

6

2

4

FIG.1D

30  30  32

30

30

32
30

32

32  36  32

FIG.2A

FIG.2B

FIG.3B

FIG.3A

Valeurs de gris

220
200
180
160
140

41

0   5  10    20    30    40    50

Distance (pixels)

30
30'

34

32
32'

Valeurs de gris

160
140
120
100
80

0  5  10    20    30    40    50  57 60

Distance (pixels)

FIG.3C

FIG.4A

Valeurs de gris

Distance (pixels)

FIG.4B

FIG.5A

FIG.5B

FIG.5C

FIG.6A

FIG.6B

FIG.6C

FIG.7A

FIG.7B

FIG.7C

FIG.8

FIG.9

FIG.10

FIG.11A

FIG.11B

FIG.12

FIG.13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **A..KRUGER et al.** Two dimensional video disdrometer : a description. *J.Atmos.Oceanic Technol.,* 2002, vol. 19, 602-217
- **BOUSSATON et al.** A new videosonde with a particle charge measurement device for in-situ observation of précipitation particles. *J.Atmos.Oceanic Technol.,* 2004, vol. 21, 1519-1531
- **DESVIGNES et al.** Raindrops size and shape from videosonde and image processing. *2012 IEEE INTERNATIONAL SYMPOSIUM ON INDUSTRIAL ELECTRONICS,* 28 Mai 2012, 1164-1167
- **BEARD et al.** *A new understanding of raindrop shape », Atmospheric Research,* 2010, vol. 97
- **SALVI.** *Pattern Récognition,* 2002, vol. 35, 1617-1635
- **FAUGERAS.** *IEEE Computer vision and pattern récognition,* 1986
- **M. DESVIGNES et al.** Raindrops size and shape from videosonde and image processing. IEEE, 2012, 1164-1167